Europäisches Patentamt

European Patent Office

Office européen des brevets

(19)

(11) Publication number: 0 342 561
A2

## (12) EUROPEAN PATENT APPLICATION

(21) Application number: 89108643.1

(22) Date of filing: 13.05.89

(51) Int. Cl.⁴: G01G 15/00

(30) Priority: 16.05.88 IT 4251288

(43) Date of publication of application:
23.11.89 Bulletin 89/47

(84) Designated Contracting States:
BE DE FR GB NL

(71) Applicant: Mori Checcucci, Andrea
Viale Solferino, 52
I-43100 Parma(IT)

(72) Inventor: Mori Checcucci, Andrea
Viale Solferino, 52
I-43100 Parma(IT)

(74) Representative: Modiano, Guido et al
MODIANO, JOSIF, PISANTY & STAUB
Modiano & Associati Via Meravigli, 16
I-20123 Milan(IT)

(54) Improvement to industrial weighing systems and respective devices to obtain it.

(57) The invention consists in a machine for checking weight accuracy, and in other machines for industrial weighing, which use two or more scales instead of only one. The scales must be similar and loaded consecutively with the mass to be checked. The scales are equipped with a device adapted to calculate the detected weight on an average.

This average weight value has regularly proven to be statistically more precise than values detected by only one scale: this is the industrial invention.

EP 0 342 561 A2

## IMPROVEMENT TO INDUSTRIAL WEIGHING SYSTEMS AND RESPECTIVE DEVICES TO OBTAIN IT

It is known that the probability of defining the exact value of a physical quality increases with the number of accurate measurements made on it and by averaging the obtained values. Restricting the principle to measuring of weight, the precision will increase by weighing the same object not once, but two, three ...n times and by averaging the values so far obtained.

The invention consists in providing the machines which are already equipped with weighing systems (static and dynamic machines for weight control,weight selecting machines, weight filling machines, weight distributing machines, etc...) of several scales arranged in sequence, so that the same quantity is successively weighed by each scale; the weight values thus obtained are then averaged by means of a suitable computer which supplies the result of these averages for each weighed mass. To give an example, reference is made to the machines for the automatic weight control referred to by the metric law as "weight selecting machines".

Such machines are mainly composed of: a conveyor spacer of the objects to be weighed, of a scale, of an electronic system for detection and comparison with one or more acceptable preset values and of an output conveyor equipped with or without a device used for the separation of non-accepted objects.

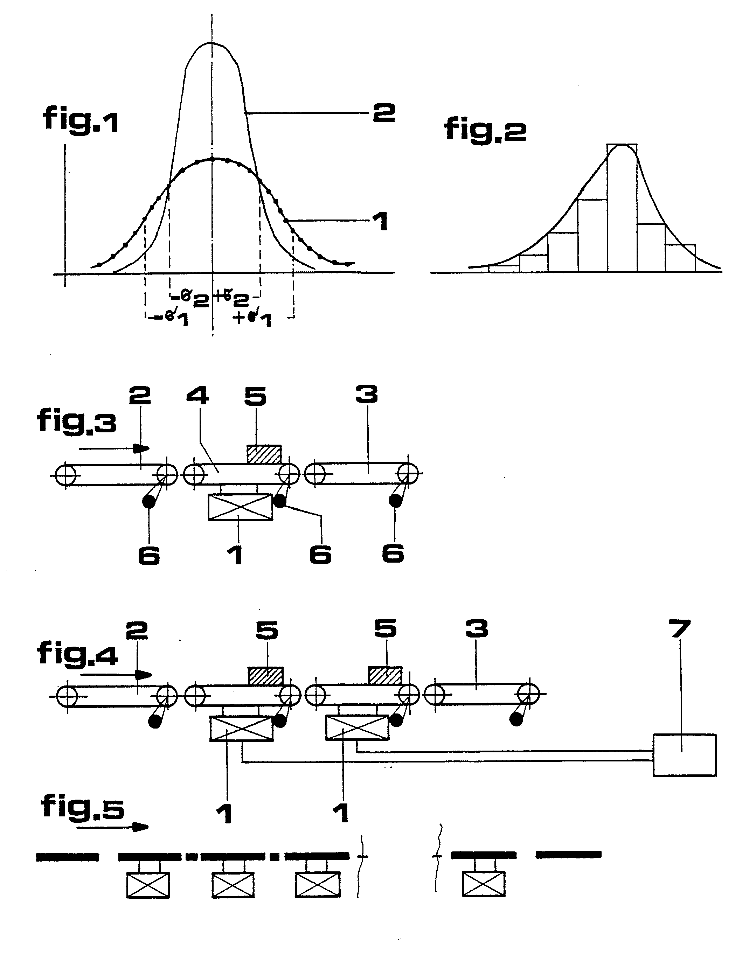

The errors of the weighing system are scattered within the region of uncertainty of the scale, the extent thereof acts as a function of three parameters: the weight of the object to be controlled, its shape and more precisely its length along the advancement direction of the object itself on the weighing plate and the speed with which it moves. The scattering of the errors (see fig. 1, curve 1) would be represented by a Gaussian curve if these errors were merely incidental; which in practice rarely occurs. The detection of numerous errors leads to the plotting of an histogram from which can be read a more or less distorted asymmetric Gaussian curve.

The value consists in three times the Mean Square Deviation or Standard Deviation and is indicated by the Arab letter "S" or the Greek "$\sigma$". This is legally defined as the weight selecting machine precision (for a certain object with a precise working speed). That is to say, the + or - $\sigma$ amplitude contains half of the errors, while $+3\sigma$ and $-3\sigma$ amplitude contains their total number.

The legal definition of a weighing machine precision is derived from this statistically made assuption.

By way of example a weight selecting machine of the motorized plate type is illustrated: it is composed of a scale (1) (see fig.3) supporting the weighing plate (4), which consists of a small conveyor belt (or chain) directly driven by a motor or by a gear motor (6).

Such a conveyor acts as a weighing plate and bears on the scale with a tare equal to the conveyor weight. It is preceded and followed by two input (2) and output (3) conveyors.

The errors made by the scale (1) which is subjected to the several weighings of the same object (5) are scattered along a curve (1) as shown in fig. 1.

This invention consists in inserting a second scale (1) (see fig. 4) in the system, so that the object (5) is weighed in succession by both scales.

Each of these scales creates a group of errors which, if taken individually, would form a curve (1) as in fig 1. If, however, the values of the readout of the first scale are from time to time memorized and averaged with those values provided by the second scale by a computer (7) (fig. 4) to which both scales are connected, the dispersion curve of errors assumes the configuration of curve No. 2 as shown in fig.1.

It should be noticed that curve 2 shows an average scatter of errors which is lower than that of curve 1. This leads to a reduction of the $\sigma$ 2 absolute value in curve 2 with respect to the $\sigma$ 1 absolute value in curve 1.

The above reduction of the STANDARD DEVIATION value is equal to approximately 30% and can be verified both theoretically and empirically.

The industrial result consists in an appreciable improvement to the precision of the weighing system, regardless of its type.

The accuracy in weighing can be refined further as the number of scales arranged in sequence increases (fig. 5). The improvement can be applied to any machine or industrial process which employs one or more weighing systems and will be increasingly useful as the precision of the weighing system reduces or as the mass to be weighed increases intrinsically in value.

This improvement is based on the well-known Gauss' theorem on repeated measurements and it is the Gaussian curve wich demonstrates the benefits provided on the precision of the weighing system. This improvement to error reduction, obviously, can be applied to a three scale sequence, thus obtaining further reductions of Standard Deviation and relevant increases in precision.

Where technical features mentioned in any claim are followed by reference signs, those reference signs have been included, for the sole purpose of increasing the intelligibility of the claims and accordingly, such reference signs do not have any limiting effect on the scope of each element identified by way of example by such reference signs.

## Claims

1. Improvement consisting in providing, in machines or industrial weighing systems, a sequence of two, three ...n similar scales instead of only one scale (or a different device for quantity weighing); in detecting the weight of the same quantity from each scale and thus assuming, as real value, the average of two, three ...n weights obtained, by means of an appropriate computer.

fig.1

**2**

**1**

$-\sigma_2$ $+\sigma_2$

$-\sigma_1$ $+\sigma_1$

fig.2

fig.3

**2** **4** **5** **3**

**6** **1** **6** **6**

fig.4

**2** **5** **5** **3** **7**

**1** **1**

fig.5